(19) Europäisches Patentamt
European Patent Office
Office européen des brevets

(11) **EP 3 293 737 B1**

(12) **EUROPEAN PATENT SPECIFICATION**

(45) Date of publication and mention
of the grant of the patent:
**06.05.2020 Bulletin 2020/19**

(51) Int Cl.:
**G21C 17/10** (2006.01)          **G21D 3/00** (2006.01)
**G05B 13/02** (2006.01)

(21) Application number: **16898012.6**

(22) Date of filing: **26.04.2016**

(86) International application number:
**PCT/KR2016/004340**

(87) International publication number:
**WO 2017/175908 (12.10.2017 Gazette 2017/41)**

(54) **CORRELATION TOLERANCE LIMIT SETTING SYSTEM USING REPETITIVE CROSS-VALIDATION AND METHOD THEREFOR**

SYSTEM ZUM EINSTELLEN DER KORRELATIONSTOLERANZGRENZEN MIT REPETITIVER KREUZVALIDIERUNG UND VERFAHREN DAFÜR

SYSTÈME DE DÉFINITION DE LIMITE DE TOLÉRANCE DE CORRÉLATION UTILISANT UNE VALIDATION CROISÉE RÉPÉTITIVE ET PROCÉDÉ ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.04.2016 KR 20160042413**

(43) Date of publication of application:
**14.03.2018 Bulletin 2018/11**

(73) Proprietor: **Kepco Nuclear Fuel Co., Ltd
Daejeon 34057 (KR)**

(72) Inventors:
• **KIM, Kang Hoon
Daejeon 34049 (KR)**
• **KIM, Byeung Seok
Seo-gu, Daejeon 35202 (KR)**
• **NAHM, Kee Yil
Daejeon 34049 (KR)**

(74) Representative: **Novagraaf Technologies
Bâtiment O2
2, rue Sarah Bernhardt
CS90017
92665 Asnières-sur-Seine Cedex (FR)**

(56) References cited:
KR-A- 20010 039 442     KR-A- 20040 099 884
KR-A- 20060 076 466     US-A- 5 912 933
US-A- 6 061 412

• KIM ET AL: "A Study on the Validation of Nuclear Criticality Analysis Codes for Spent Fuel", MASTER'S THESIS OF GRADUATE SCHOOL OF CHOSUN UNIVERSITY, CHOSUN UNIVERSITY: DEPARTMENT OF NUCLEAR ENGINEERING, KOREA , 25 February 2016 (2016-02-25), pages 1-74, XP009507626, Retrieved from the Internet: URL:http://www.riss.kr/link?id=T14038693 [retrieved on 2018-10-25]
• KIM, KWANG BONG: 'A Study on the Validation of Nuclear Criticality Analysis Codes for Spent Fuel' MASTER'S THESIS OF GRADUATE SCHOOL OF CHOSUN UNIVERSITY 25 February 2016, XP009507626

**Description**

**Technical Field**

The present invention relates to a system for setting a tolerance limit of a correlation by using repetitive cross-validation and a method thereof. More particularly, the present invention relates to a system for setting the tolerance limit of the correlation by using repetitive cross-validation and a method thereof to prevent intentional or unintentional distortion of data characteristics by human intervention or otherwise, to prevent risk caused by distortion of data characteristics, and to quantify the influence of the distortion of the data characteristics in fitting the correlation and setting the tolerance limit.

**Background Art**

Hitherto, according to Korean unexamined patent publication No. 2011-0052340, as a method of evaluating trip setpoint of reactor core state, a trip setpoint is calculated by using information on neutron flux distribution calculated in advance with respect to each of more than 600 reactor core states, information on instruments for regional overpower protection and information on thermal-hydraulics. Upon completion of a trip setpoint calculation, by deriving an optimal correlation between information on a signal distribution of instruments for regional overpower protection and the trip setpoint, a method is provided to determine the trip setpoint corresponding to each reactor core state using only the signal distribution of instruments.

In the conventional art, in a way to avoid over-fitting risk, fitting a correlation is performed on the basis of data partitioning (training set vs validation set) of one round or limited number of cases, or the tolerance limit and application scope of the correlation is set individually through simple statistics analysis with respect to a separated dataset by finalizing the fitting related task at a level of managing separately independent testing dataset having same design or similar design characteristics.

Regarding the limited number of cases, fitting the correlation and setting the tolerance limit based on separated dataset have a problem, wherein intentional or unintentional distortion of data characteristics by human intervention or otherwise is unable to be prevented, to prevent risk caused by unintentional distortion of data characteristics is unable to be prevented, and the influence of the distortion of the data characteristics in fitting the correlation and setting the tolerance limit is unable to be quantified.

In addition, in the case of managing separately independent testing dataset having the same design or similar design characteristics, as an influence due to the difference of detailed design characteristics along with reproducibility scope of test data is potentially involved, there may be limitations in separating the over-fitting risk or the influence. Consequently, it inevitably increases cost for additional production of testing data.

KIM ET AL discloses (see p 25, 29 - 33 of "A Study on the Validation of Nuclear Criticality Analysis Codes for Spent Fuel", MASTER'S THESIS OF GRADUATE SCHOOL OF CHOSUN UNIVERSITY, CHOSUN UNIVERSITY: DEPARTMENT OF NUCLEAR ENGINEERING, KOREA, 25 February 2016) the identification of a linear correlation coefficient and population extraction by statistical methods and a normality test for testing whether the probability distribution of the population follows a normal distribution.

**Disclosure**

**Technical Problem**

An object of the present invention, proposed in view of the aforementioned problems in the related art, is to perform fitting of a correlation and setting a tolerance limit within the scope of technical/regulatory requirements or to provide a system for setting the tolerance limit of the correlation by using repetitive cross-validation and a method thereof, which validates the effectiveness thereof.

Another object of the present invention is to provide the system for setting the tolerance limit of the correlation by using repetitive cross-validation and the method thereof, whereby intentional or unintentional distortion of data characteristics by human intervention or otherwise can be prevented, risk caused by distortion of data characteristics can be prevented, and the influence of the distortion of the data characteristics can be quantified.

**Technical Solution**

The technical solution is provided by a system according to the subject-matter of claim 1 and a method according to the subject-matter of claim 6. Additional features of preferred embodiments of the solution are defined by the dependent claims.

## Advantageous Effects

As described above, in fitting a correlation and setting a tolerance limit, there is an effect of preventing intentional or unintentional distortion of data characteristics by human intervention or otherwise, preventing risk caused by distortion of data characteristics, and enabling quantifying of the influence of the distortion of the data characteristics.

## Description of Drawings

FIG. 1 is a block diagram illustrating a system for setting a tolerance limit of a correlation by using repetitive cross-validation according to an embodiment of the present invention.
FIG. 2 is a diagram illustrating the operation of a variable extraction unit of the system for setting the tolerance limit of the correlation by using repetitive cross-validation according to an embodiment of the present invention.
FIG. 3 is a diagram illustrating the operation of a normality test unit and a DNBR limit unit in the system for setting the tolerance limit of the correlation by using repetitive cross-validation according to an embodiment of the present invention.
FIG. 4 is an overall flow chart illustrating a method of using the system for setting the tolerance limit of the correlation by using repetitive cross-validation according to an embodiment of the present invention.
FIG. 5 is a graph illustrating the conceptual result of the system for setting the tolerance limit of the correlation by using repetitive cross-validation according to an embodiment of the present invention.
FIG. 6 is a graph illustrating the probability density function of a correlation M/P value and a concept of the tolerance limit of the system for setting the tolerance limit of the correlation by using repetitive cross-validation according to an embodiment of the present invention.
Fig. 7 is a graph illustrating the distribution of averages of a variable extracted through the variable extraction unit of the system for setting the tolerance limit of the correlation by using repetitive cross-validation according to an embodiment of the present invention.

## Best Mode

Specific characteristics and advantageous features of the present invention will become clearer through description below with reference to the accompanying drawings. Prior to this, it should be noted that detailed descriptions of known functions and components incorporated herein have been omitted when they may make the subject matter of the present invention unclear.
Hereinafter, the present invention will be described in detail with reference to the accompanying drawings.

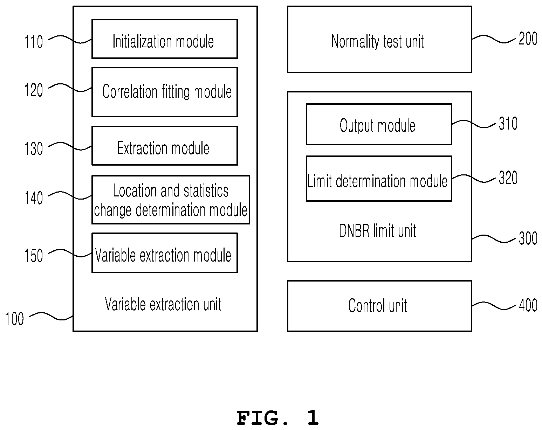

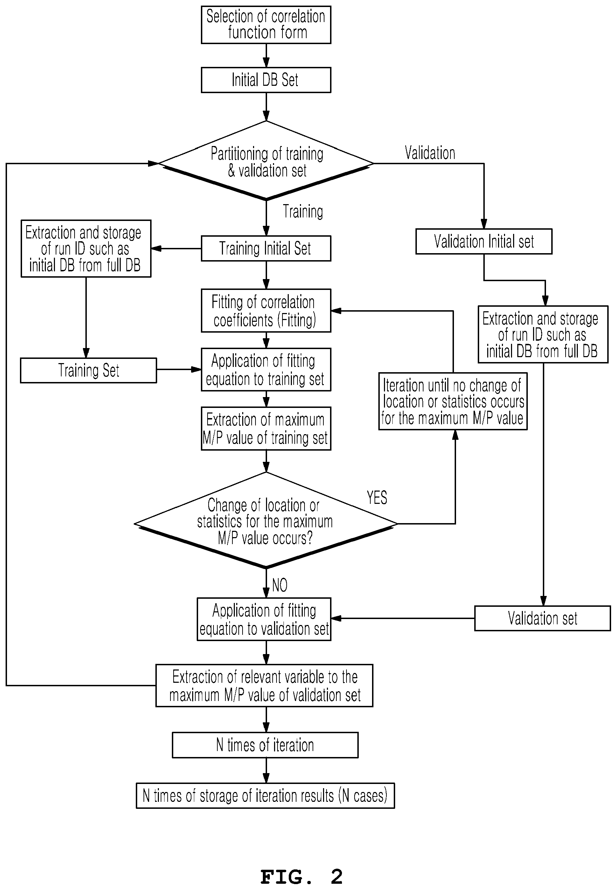

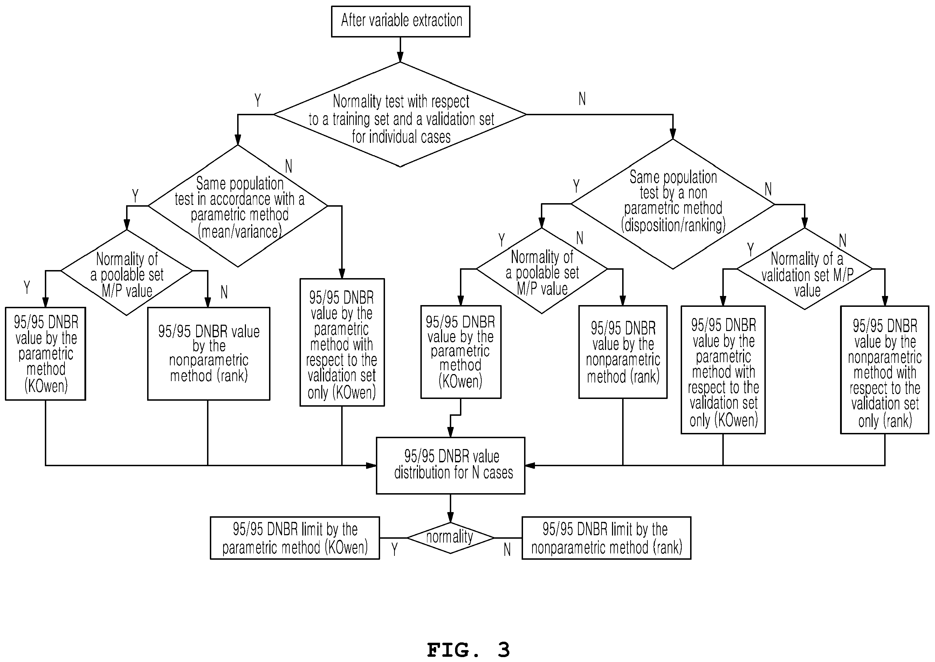

FIG. 1 is a block diagram illustrating a system for setting a tolerance limit of a correlation by using repetitive cross-validation according to an embodiment of the present invention, FIG. 2 is a diagram illustrating the operation of a variable extraction unit of the system for setting the tolerance limit of the correlation by using repetitive cross-validation according to an embodiment of the present invention, and FIG. 3 is a diagram illustrating the operation of a normality test unit and a DNBR limit unit in the system for setting the tolerance limit of the correlation by using repetitive cross-validation according to an embodiment of the present invention.
As illustrated in FIG. 1, the system for setting the tolerance limit of the correlation by using repetitive cross-validation according to an embodiment of the present invention includes a variable extraction unit 100, a normality test unit 200, a DNBR limit unit 300 and a control unit 400.
First of all, the variable extraction unit 100 performs the function N times by iterating a process, the process of extracting a variable by partitioning a training set and a validation set and by fitting the correlation coefficients.
The variable extraction unit 100 to perform this function includes an initialization module 110, a correlation fitting module 120, an extraction module 130, a location and statistics change determination module 140 and a variable extraction module 150.
An initialization module 110 partitions the training set and the validation set, the validation set extracts a run ID such as an initial DB from a full DB at a validation initial set and the training set extracts the run ID such as the initial DB from the full DB at a training initial set.
A correlation fitting module 120 performs fitting of correlation coefficients of the training initial set.
An extraction module 130 extracts a maximum M/P value for an individual run ID by applying a fitting result of the correlation coefficients to the training set. Here, the correlation according to an embodiment of the present invention is a critical heat flux (CHF) correlation and extracts the maximum statistics (average M/P value) for individual run ID.
a location and statistics change determination module 140 determines whether the location of an extracted maximum M/P value or statistics of an average M/P value have changed or not. The determination module 140 iteratively performs fitting stage for the correlation coefficients at the training initial set until no location change occurs in case of location change, or no statistics change occurs in case of statistics change, for the extracted maximum M/P value.

A variable extraction module 150 is able to extract a relevant variable to the maximum M/P value, by applying a fitting result of the correlation coefficients to the validation set, and store results by iterating the operation of the process for N times from the initialization module up to the variable extraction module.

Here, 'N' may be set to 5, 10, 20, 100, 200, 1000, 5000 or greater and around 1000 in a typical embodiment is appropriate.

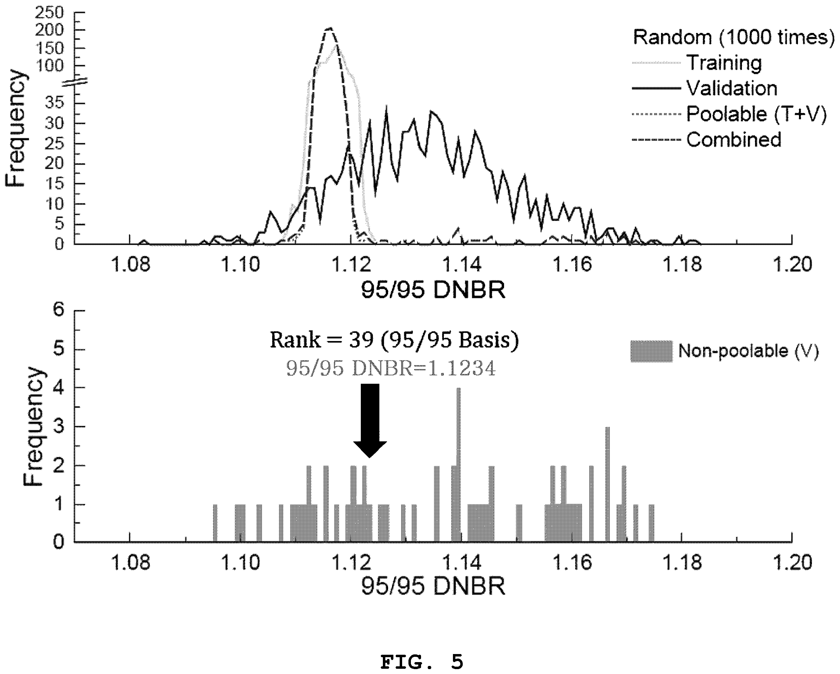

FIG. 5 is a graph illustrating the conceptual result of the system for setting the tolerance limit of the correlation by using repetitive cross-validation according to an embodiment of the present invention.

Conceptual results in a typical embodiment are shown in Table 1 and FIG. 5.

Table 1

[Table 1]

| Individual tolerance distribution | Dataset group | No. of case | Average | S.D. | Remark |
|---|---|---|---|---|---|
| Poolability | Poolable (T+V) | 941 | 1.1161 | 0.0017 | |
| | Non-poolable (V) | 59 | 1.1375 | 0.0220 | |
| Combined | (T+V) and (V) | 1000 | 1.1173 | 0.0075 | 1.1234 (39th value*) |
| * Table 1 above indicates nonparametric rank | | | | | |

The normality test unit 200 performs the normality test with respect to the result (maximum M/P value for individual run ID in the training set) of the extraction module passed through the location and statistics change determination module 140 and the result (maximum M/P value for individual run ID in the validation set) of the variable extraction module 150 or the poolable set, etc. Further, the unit 200 performs normality validation with respect to the 95/95 DNBR distribution produced in the DNBR limit unit.

The DNBR limit unit 300 performs the same population test by the parametric method and the nonparametric method for individual cases and outputs a 95/95 DNBR value for the individual cases based upon normality of a poolable set M/P value and normality of a validation set M/P value. Then the unit 300 outputs 95/95 DNBR value distribution for N cases, based on the 95/95 DNBR value and determines to choose 95/95 DNBR limit by the parametric method or 95/95 DNBR limit by the nonparametric method based upon normality of the 95/95 DNBR value distribution.

With this DNBR limit unit 300, determining the ultimate tolerance limit in compliance with 95/95 criteria (95% confidence level and 95% probability) by using the distribution, it is possible to prevent distortion of data characteristics, to prevent risk caused by the distortion of data characteristics, and to quantify the influence of the distortion of the data characteristics.

The DNBR limit unit 300 to perform this function includes an output module 310 and a limit determination module 320.

The output module 310 performs the same population test by using the parametric method and the nonparametric method for the individual cases and outputs a 95/95 DNBR value by the parametric method or a 95/95 DNBR value by the nonparametric method calculated by using the limit determination module 320 based upon normality of a poolable set M/P value and normality of a validation set M/P value. Then the module 310 outputs 95/95 DNBR value distribution for N cases, based on the 95/95 DNBR value. The module 320 calculates the 95/95 DNBR value by using the parametric method or the 95/95 DNBR value by the nonparametric method for the individual cases based upon normality of the output module 310 and determines a 95/95 DNBR limit by the parametric method or the 95/95 DNBR limit by the nonparametric method for the 95/95 DNBR value distribution for the N cases.

For reference, as a CHF correlation limit DNBR, the DNBR is the quantitative criteria assessing the occurrence of CHF on the nuclear fuel rod surface and is determined by assessing statistically the prediction uncertainty of the CHF correlation. According to the thermal design criteria for a reactor core, the CHF correlation limit DNBR should be so set that the probability that the CHF does not occur should be 95% or greater at the confidence level of 95% or greater. DNBR is defined as the ratio of predicted CHF (=P) and actual local heat flux (=A), namely DNBR=P/A. In experimental condition for the CHF, as actual local heat flux is identical to measured CHF (=M), DNBR has the same meaning as P/M. Though the CHF(P) predicted by the correlation in a constant local thermal-hydraulic condition is calculated always as a fixed value, CHF(M) actually measured in the same condition may have some arbitrary value due to the randomness of the physical phenomenon. In view of this, M/P value is selected as a random variable for statistical assessment of DNBR. To meet the design criteria on CHF, actual local heat flux in an arbitrary operating condition should be smaller than critical heat flux measured in the same condition. Namely A<M, here, provided the uncertainty of M is taken into consideration according to the 95/95 design criteria, the condition above is expressed as follow.

A<M(95/95 lower limit)

By applying DNBR=P/A, with both sides divided by P, it becomes,

$$\mathrm{DNBR} > 1/(M/P)_{\text{95/95 lower limit}}.$$

From this, a correlation limit DNBR(DNBR$_{CL}$) is defined as,

$$\mathrm{DNBR_{CL}} \equiv 1/(M/P)_{\text{95/95 lower limit}}.$$

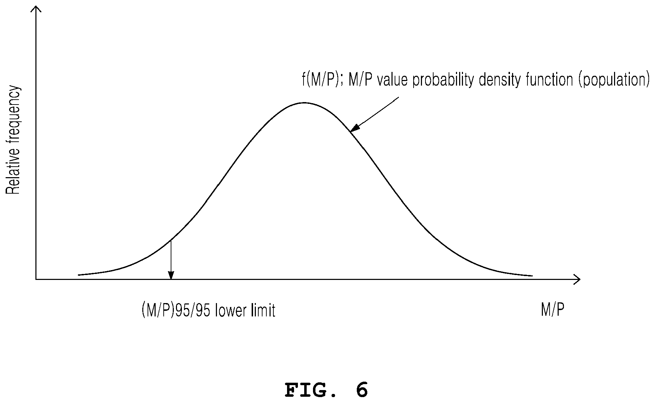

95/95 lower limit of M/P value is determined from the tolerance limit by estimating and assessing the population statistics from the M/P value sample as FIG. 6.

FIG. 6 is a graph illustrating the probability density function of a correlation M/P value and a concept of the tolerance limit of the system for setting the tolerance limit of the correlation by using repetitive cross-validation according to an embodiment of the present invention.

The control unit 400 is constituted to control the variable extraction unit 100, the normality test unit 200, and the DNBR limit unit 300.

In accordance with this control signal of the control unit, a method of using the system for setting the tolerance limit of the correlation by using repetitive cross-validation according to an embodiment of the present invention is described as follows.

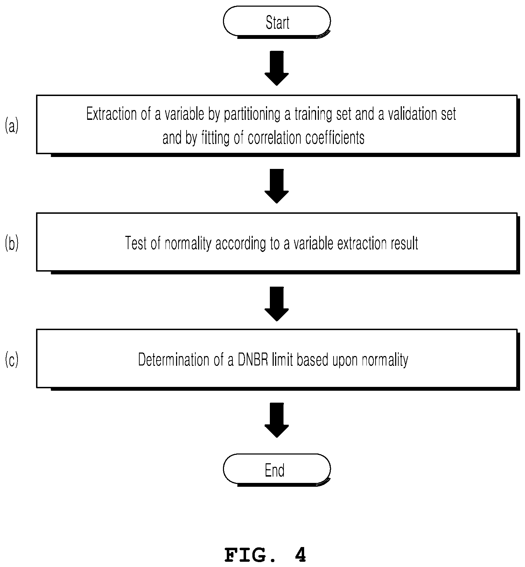

FIG. 4 is an overall flow chart illustrating the method of using the system for setting the tolerance limit of the correlation by using repetitive cross-validation according to an embodiment of the present invention.

As shown in the drawing, the method is performed as follows. (a) First, the control unit extracts the variable by partitioning the training set and the validation set and by fitting the correlation coefficients.

(b) Next, the control unit performs the normality test for the variable extraction results.
(c) Finally, the control unit determines the allowable DNBR limit based upon tested normality in the (b).

The process of fitting the correlation coefficients and extracting the variable in the step (a) is performed by: ① performing the data partitioning into the training set (T: training dataset) and validation set (V: validation dataset); ② in fitting the correlation (coefficients), performing fitting until no change of location or statistics occurs for the maximum M/P value for an individual run ID in T; ③ calculating and extracting the maximum M/P value for the individual run ID in V; ④ storing the M/P value for the individual run ID in T and V; and ⑤ iterating the substeps ① ~ ④ (N cases) N times.

The variable extraction process in the step (a) is performed by the substeps of: (a-1) wherein partitioning the training set and validation set and extracting run ID such as initial DB from the full DB are performed, thereby realizing initialization; (a-2) wherein fitting of the correlation of training initial set is performed; (a-3) wherein extracting the maximum M/P value by applying correlation fitting results to the training set is performed; (a-4) wherein determining the change of location and statistics of the extracted maximum M/P value is performed, while it is allowed to iterate performing the fitting of the correlation until no change of location or statistics occurs; and (a-5) wherein, when no change of location or statistics occurs for the extracted maximum M/P value, extracting the variable to extract relevant variable to the maximum M/P, by applying the fitting result of the correlation coefficients to the validation set is performed.

The normality test for variable extraction results in the step (b) is performed as follows: ⑥ the normality test for M/P value distribution in T and V for individual cases is performed; ⑦ in performing the same population test for the individual cases, the parametric method is used when T and V are normal distributions and the nonparametric method is used when T or V is not normal distribution; ⑧ in calculating 95/95 DNBR value for the individual cases, determination is made based on the poolable dataset group of T and V when T and V have the same population, wherein the parametric method or the nonparametric method is applicable depending on the results after performing the normality test for the poolable dataset group; and determination is made based on the V only when T and V do not have the same population, wherein the parametric method or the nonparametric method is applicable depending on the results of the normal distribution test performed in advance; ⑨ based on the result of '⑧', 95/95 DNBR value distribution is produced with respect to T, V, poolable, non-poolable and combined (poolable+non-poolable); ⑩ and the normality test is performed with respect to '⑨'.

In addition, in the normality test in the step (b), the normality test is performed with respect to the training set and the validation set for the individual cases and normality of the M/P value extracted by the parametric method or the nonparametric method is determined.

Determination of an allowable DNBR limit in the step (c) is performed as follows: ⑪ in calculating the 95/95 DNBR limit, the parametric method is used when the results in ⑩ are normal distribution and the nonparametric method is used when the results in ⑩ are not normal distribution; ⑫ in determining the 95/95 DNBR limit, in an embodiment, the 95/95 tolerance of a 'combined' distribution is determined such as 1.1234 → 1.124 and the average of 'validation' is determined such as 1.1337 → 1.134 in the other embodiment.

The step (c) enables a substep (c-1) to output 95/95 DNBR value distribution for N cases based on the 95/95 DNBR value for the individual cases, based upon normality of poolable set M/P value and normality of validation set M/P value by the parametric method and the nonparametric method and a substep (c-2) to determine 95/95 DNBR limit by the parametric method or 95/95 DNBR limit by the nonparametric method, based upon normality.

In an embodiment of the present invention, data partitioning in setting of N should be random base, but data partitioning is allowed to include k-folds(perform data partitioning into k subgroups being not to overlap each other and iterate k times internally for k-1 subgroups as the training set and one subgroup as the validation set). Setting the tolerance limit and validation thereof is possible for variables of implementation in an embodiment of the present invention using not only M/P value but also values of M/P-1, M-P or P/M, P/M-1, P-M, and P- and so on.

In the other embodiment, by expansion of the typical embodiment provided, implementation is possible in a form of performing iteration for N cases up to right before the 'production of 95/95 DNBR value distribution for N cases.' In addition, implementation is also possible to analyze '95/95 DNBR value distribution' with respect to two dataset groups of training dataset and validation dataset for each or individual cases and the for the combination thereof when they have a same population or not.

Table 2

[Table 2]

| Individual tolerance distribution | Group | No. of case | Average | S.D. (Standard Deviation) | Remark |
|---|---|---|---|---|---|
| All | Training | 1000 | 1.1168 | 0.0027 | |
| | Validation | 1000 | 1.1337 | 0.0151 | 1.134 |

An effect by an operation of the system for setting the tolerance limit of the correlation by using repetitive cross-validation according to the present invention reduces the tolerance limit by maximum 2.5% compared with existing one, and the reduction of the tolerance limit is possibly to be utilized for the increase of safety margin or enhancement of actual performance. Compared with domestic technology, the effect is the improvement by maximum 5%.

Table 3

[Table 3]

| Case | Presented tolerance limit | Risk/ Effect | Expected tolerance limit |
|---|---|---|---|
| Existing/Similar technology not implemented (domestic level) | 1.113 | Max. | 1.18 |
| Existing/Similar technology implemented (overseas level) | 1.08~1.18 | Case-by-case | 1.15 |

(continued)

| Case | | Presented tolerance limit | Risk/ Effect | Expected tolerance limit |
|---|---|---|---|---|
| Invention technology | Typical embodiment(95/95 DNBR value distribution criteria with respect to combined data) | - | ~1% | 1.124 |
| | Other embodiment (95/95 DNBR value distribution criteria with respect to validation data) | - | ~2% | 1.134 |
| * Compared with domestic technology level | | | | |

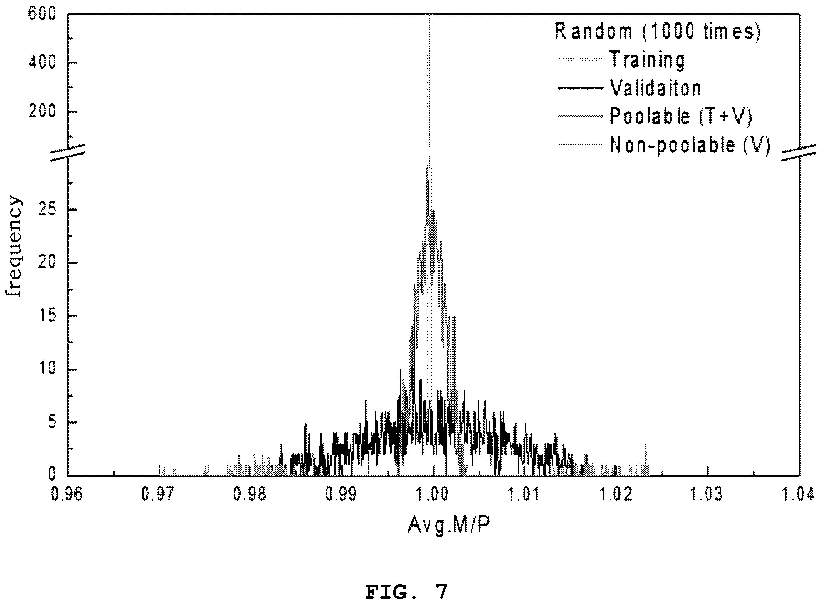

Fig. 7 is a graph illustrating the distribution of averages of a variable extracted through the variable extraction unit of the system for setting the tolerance limit of the correlation by using repetitive cross-validation according to an embodiment of the present invention.

This FIG. 7 shows, according to classification of FIG.5, the average values of the variable (M/P value) extracted from two datasets (training and validation) for N cases produced from the results in FIG. 2 via the processes of FIG. 3 and FIG. 4.

The system for setting the tolerance limit of the correlation by using repetitive cross-validation according to an embodiment of the present invention has an ability to perform the same population test (parametric method or nonparametric method) among M/P values of training and validation dataset for N cases by referring to FIG. 3.

In addition, as a process of producing 95/95 DNBR value for the case of the same population or otherwise, the features are in the parametric method or the nonparametric method, and another feature is in the ability to determine 95/95 DNBR limit from the 95/95 DNBR values distribution

The system for setting the tolerance limit of the correlation by using repetitive cross-validation according to an embodiment of the present invention performs the following: ① the system partitions data into the training dataset (T) and the validation dataset (V);

② in performing the fitting of the correlation (coefficients), the system performs the fitting until no change occurs for the location or statistics of the maximum M/P value for individual run ID in T;

③ the system calculates and extracts the maximum M/P value for individual run ID in V, and ④ stores M/P value for individual run ID in T and V;

(5) the system iterates the process of ①~④ N times (N cases);

⑥ the system tests normality of the M/P value distribution for the individual cases in T and V;

⑦ the system, in testing the same population for the individual cases, performs the test by the parametric method when T and V are normal distributions and performs the test by the nonparametric method when T or V is not normal distribution;

⑧ in calculating 95/95 DNBR value for the individual cases, the system determines by using poolable dataset group of T and V as a reference when T and V have the same population. Here, the parametric method or the nonparametric method is applicable depending on the results after performing the normality test for the poolable dataset group; the system determines by using V only as a reference when T and V do not have the same population, wherein the parametric method or the nonparametric method is applicable depending on the test results performed in advance for the normal distribution;

⑨ based on the result of '⑧', the system produces 95/95 DNBR value distribution with respect to T, V, poolable, non-poolable and combined (poolable+non-poolable);

⑩ the system tests normality for '⑨';

⑪ in calculating the 95/95 DNBR limit, the system calculates the limit by the parametric method when the results in ⑩ are normal distribution and by the nonparametric method when the results in ⑩ are not normal distribution; and

⑫ in determining the 95/95 DNBR limit, the system, in an embodiment, determines the 95/95 tolerance of a 'combined' distribution such as 1.1234 → 1.124 and, in the other embodiment, determines the average of 'validation' distribution such as 1.1337 → 1.134.

### <Description of the Reference Numerals in the Drawings>

100: the variable extraction unit, 110: the initialization module.

120: the correlation fitting module, 130: the extraction module.
140: the location and statistics change determination module, 150: variable extraction module
200: the normality test unit, 300: the DNBR limit unit.
310: the output module, 320: the limit determination module.

**Claims**

1. A system for setting a tolerance limit of a correlation by using repetitive cross-validation, the system comprising:

   a variable extraction unit (100) adapted to extract a maximum measurement/prediction, M/P, variable by partitioning a training set and a validation set of data and by fitting correlation coefficients for determining the maximum M/P variable from the data;
   a normality test unit (200) adapted to perform a normality test for the maximum M/P variable; and
   a departure from nucleate boiling ratio, DNBR, limit unit (300) adapted to determine an allowable DNBR limit based upon the maximum M/P variable, the determination depending on the tested normality.

2. The system of claim 1, wherein the variable extraction unit (100) comprises:

   an initialization module (110) adapted to partition a full database, DB, of run identification numbers, IDs, into the training set and the validation set;
   a correlation fitting module (120) adapted to perform the fitting of correlation coefficients of a training initial set;
   an extraction module (130) adapted to extract the maximum M/P value for an individual run ID of the training set by applying the fitting result of the correlation coefficients to the individual run ID;
   a location and statistics change determination module (140) adapted to determine whether a location or statistics of an extracted maximum M/P change or not, and if there is a change, connection to the correlation fitting module (120) for adapting the correlation coefficients until there is no change; and
   a variable extraction module (150) adapted to extract the maximum M/P value, by applying the fitting result of the correlation coefficients to the validation set.

3. The system of claim 1, wherein, when the training set and the validation set have a same population, the normality test unit (200) determines whether M/P values have normality or not, the M/P values being extracted by a parametric method or a nonparametric method according to the normality test for a poolable dataset of the training set and the validation set.

4. The system of claim 1, wherein, when the training set and the validation set do not have a same population, the normality test unit (200) determines whether M/P values have normality or not, the M/P values being extracted by a parametric method or a nonparametric method depending on the result of a normal distribution test performed in advance on the basis of the validation set only.

5. The system of claim 1, wherein the DNBR limit unit (300) comprises:

   an output module (310) adapted to perform a same population test by using a parametric method and a nonparametric method for individual cases and outputting a 95/95 DNBR value distribution for the individual cases based upon normality of a poolable set M/P value and normality of a validation set M/P value; and
   a limit determination module (320) adapted to calculate the 95/95 DNBR value by using the parametric method or the 95/95 DNBR value by using the nonparametric method for the individual cases based upon normality of the output module (310), and determining a 95/95 DNBR limit by using the parametric method or the 95/95 DNBR limit by using the nonparametric method for the 95/95 DNBR value distribution for N cases.

6. A method of setting a tolerance limit of a correlation by using repetitive cross-validation, the method being performed by a control unit (400) of a system according to the subject-matter of claim 1, and comprising:

   (a) extracting, by the control unit (400), a maximum M/P variable by partitioning a training set and a validation set of data and by fitting correlation coefficients for determining maximum M/P variable from data;
   (b) performing, by the control unit (400), a normality test for the maximum M/P variable; and
   (c) determining, by the control unit (400), an allowable DNBR limit based upon the maximum M/P variable, the determination depending on the tested normality.

7. The method of claim 6, wherein the method step (a) comprises:

(a-1) initializing, by the control unit (400), by partitioning a full database DB of run IDs into the training set and the validation set;

(a-2) fitting, by the control unit (400), correlation coefficients by performing fitting of correlation coefficients of a training initial set, subset of the training set;

(a-3) extracting, by the control unit (400), a maximum M/P value for an individual run ID of the training set by applying the fitting result of the correlation coefficients to the individual run ID;

(a-4) determining, by the control unit (400), whether a location or statistics of an extracted maximum M/P value change or not, and if there is a change, step back to step (a-2) for adapting the correlation coefficients until there is no change; and

(a-5) extracting, by the control unit (400), the variable by extracting a relevant variable to the maximum M/P value by applying the fitting result of the correlation coefficients to the validation set.

8. The method of claim 6, wherein when the training set and the validation set have a same population in step (b), the control unit (400) determines whether M/P values have normality or not, the M/P values being extracted by a parametric method or a nonparametric method according to the normality test for a poolable dataset of the training set and the validation set.

9. The method of claim 6, wherein, when the training set and the validation set do not have a same population in step (b), the control unit (400) determines whether M/P values have normality or not, the M/P values being extracted by a parametric method or a nonparametric method depending on the result of a normal distribution test performed in advance on the basis of the validation set only.

10. The method of claim 6, wherein method step (c) comprises:

(c-1) performing, by the control unit (400), a same population test by using a parametric method and a nonparametric method for individual cases and outputting a 95/95 DNBR value distribution for the individual cases based upon normality of a poolable set M/P value and normality of a validation set M/P value; and

(c-2) calculating, by the control unit (400), the 95/95 DNBR value by using the parametric method or the 95/95 DNBR value by using the nonparametric method for the individual cases based upon normality of the poolable set M/P value and normality of the validation set M/P value, and determining a 95/95 DNBR limit by using the parametric method or the 95/95 DNBR limit by using the nonparametric method for the 95/95 DNBR value distribution for N cases.

**Patentansprüche**

1. System zum Einstellen einer Toleranzgrenze einer Korrelation unter Verwendung von wiederholter Kreuzvalidierung, wobei das System umfasst:

eine Variablenextraktionseinheit (100), die dazu geeignet ist, eine maximale Mess-/Prognose-, M/P, Variable durch Aufteilen eines Trainingssatzes und eines Validierungssatzes von Daten und durch Anpassen von Korrelationskoeffizienten zum Bestimmen der maximalen M/P-Variable aus den Daten zu extrahieren;

eine Normalitätstesteinheit (200), die dazu geeignet ist, einen Normalitätstest für die maximale M/P-Variable durchzuführen; und

eine Departure from Nucleate Boiling Ratio-, DNBR, Grenzeinheit (300), die dazu geeignet ist, eine zulässige DNBR-Grenze auf Basis der maximalen M/P-Variable zu bestimmen, wobei die Bestimmung von der getesteten Normalität abhängt.

2. System nach Anspruch 1, wobei die Variablenextraktionseinheit (100) umfasst:

ein Initialisierungsmodul (110), das dazu geeignet ist, eine ganze Datenbank, DB, von Lauf-Identifikationsnummern, IDs, in den Trainingssatz und den Validierungssatz aufzuteilen;

ein Korrelationsanpassungsmodul (120), das dazu geeignet ist, die Anpassung von Korrelationskoeffizienten eines anfänglichen Trainingssatzes durchzuführen;

ein Extraktionsmodul (130), das dazu geeignet ist, den maximalen M/P-Wert für eine einzelne Lauf-ID des Trainingssatzes durch Anwenden des Anpassungsergebnisses der Korrelationskoeffizienten auf die einzelne Lauf-ID zu extrahieren;

ein Stellen- und Statistikänderungen-Bestimmungsmodul (140), das dazu geeignet ist, zu bestimmen, ob sich eine Stelle oder Statistik eines extrahierten maximalen M/P ändert oder nicht, und wenn es eine Änderung gibt, Verbindung zum Korrelationsanpassungsmodul (120), um die Korrelationskoeffizienten anzupassen, bis es keine Änderung mehr gibt; und

ein Variablenextraktionsmodul (150), das dazu geeignet ist, den maximalen M/P-Wert durch Anwenden des Anpassungsergebnisses der Korrelationskoeffizienten auf den Validierungssatz zu extrahieren.

3. System nach Anspruch 1, wobei, wenn der Trainingssatz und der Validierungssatz ein und dieselbe Grundgesamtheit aufweisen, die Normalitätstesteinheit (200) bestimmt, ob M/P-Werte Normalität aufweisen oder nicht, wobei die M/P-Werte gemäß dem Normalitätstest für einen poolfähigen Datensatz des Trainingssatzes und des Validierungssatzes über ein parametrisches Verfahren oder ein nichtparametrisches Verfahren extrahiert werden.

4. System nach Anspruch 1, wobei, wenn der Trainingssatz und der Validierungssatz nicht ein und dieselbe Grundgesamtheit aufweisen, die Normalitätstesteinheit (200) bestimmt, ob M/P-Werte Normalität aufweisen oder nicht, wobei die M/P-Werte abhängig vom Ergebnis eines Normalverteilungstests, der im Vorfeld nur auf Basis des Validierungssatzes durchgeführt wird, über ein parametrisches Verfahren oder ein nichtparametrisches Verfahren extrahiert werden.

5. System nach Anspruch 1, wobei die DNBR-Grenzeinheit (300) umfasst:

ein Ausgabemodul (310), das dazu geeignet ist, ein und denselben Grundgesamtheitstest unter Verwendung eines parametrischen Verfahrens und eines nichtparametrischen Verfahrens für einzelne Fälle durchzuführen und eine 95/95-DNBR-Werteverteilung für die einzelnen Fälle auf Basis von Normalität eines M/P-Werts des poolfähigen Satzes und Normalität eines M/P-Werts des Validierungssatzes auszugeben; und

ein Grenzbestimmungsmodul (320), das dazu geeignet ist, den 95/95-DNBR-Wert unter Verwendung des parametrischen Verfahrens, oder den 95/95-DNBR-Wert unter Verwendung des nichtparametrischen Verfahrens für die einzelnen Fälle auf Basis von Normalität des Ausgabemoduls (310) zu berechnen, und eine 95/95-DNBR-Grenze unter Verwendung des parametrischen Verfahrens, oder die 95/95-DNBR-Grenze unter Verwendung des nichtparametrischen Verfahrens für die 95/95-DNBR-Werteverteilung für N Fälle zu bestimmen.

6. Verfahren zum Einstellen einer Toleranzgrenze einer Korrelation unter Verwendung von wiederholter Kreuzvalidierung, wobei das Verfahren von einer Steuereinheit (400) eines Systems nach dem Gegenstand von Anspruch 1 durchgeführt wird und umfasst:

(a) Extrahieren einer maximalen M/P-Variable durch die Steuereinheit (400) durch Aufteilen eines Trainingssatzes und eines Validierungssatzes von Daten und durch Anpassen von Korrelationskoeffizienten, um die maximale M/P-Variable aus den Daten zu bestimmen;

(b) Durchführen eines Normalitätstests für die maximale M/P-Variable durch die Steuereinheit (400); und

(c) Bestimmen einer zulässigen DNBR-Grenze durch die Steuereinheit (400) auf Basis der maximalen M/P-Variable, wobei die Bestimmung von der getesteten Normalität abhängt.

7. Verfahren nach Anspruch 6, wobei der Verfahrensschritt (a) umfasst:

(a-1) Initialisieren durch Aufteilen einer ganzen Datenbank, DB, von Lauf-IDs durch die Steuereinheit (400) in den Trainingssatz und den Validierungssatz;

(a-2) Anpassen von Korrelationskoeffizienten durch die Steuereinheit (400) durch Durchführen von Anpassung von Korrelationskoeffizienten eines anfänglichen Trainingssatzes, Teilsatz des Trainingssatzes;

(a-3) Extrahieren eines maximalen M/P-Werts für eine einzelne Lauf-ID des Trainingssatzes durch die Steuereinheit (400) durch Anwenden des Anpassungsergebnisses der Korrelationskoeffizienten auf die einzelne Lauf-ID;

(a-4) Bestimmen, durch die Steuereinheit (400), ob sich eine Stelle oder Statistik eines extrahierten maximalen M/P-Werts ändern oder nicht, und wenn es eine Änderung gibt, Zurückkehren zu Schritt (a-2), um die Korrelationskoeffizienten anzupassen, bis es keine Änderung mehr gibt; und

(a-5) Extrahieren der Variablen durch die Steuereinheit (400) durch Extrahieren einer relevanten Variable für den maximalen M/P-Wert durch Anwenden des Anpassungsergebnisses der Korrelationskoeffizienten auf den Validierungssatz.

8. Verfahren nach Anspruch 6, wobei, wenn der Trainingssatz und der Validierungssatz in Schritt (b) ein und dieselbe Grundgesamtheit aufweisen, die Steuereinheit (400) bestimmt, ob M/P-Werte Normalität aufweisen oder nicht, wobei die M/P-Werte gemäß dem Normalitätstest für einen poolfähigen Datensatz des Trainingssatzes und des Validierungssatzes über ein parametrisches Verfahren oder ein nichtparametrisches Verfahren extrahiert werden.

9. Verfahren nach Anspruch 6, wobei, wenn der Trainingssatz und der Validierungssatz in Schritt (b) nicht ein und dieselbe Grundgesamtheit aufweisen, die Steuereinheit (400) bestimmt, ob M/P-Werte Normalität aufweisen oder nicht, wobei die M/P-Werte abhängig vom Ergebnis eines Normalverteilungstests, der im Vorfeld nur auf Basis des Validierungssatzes durchgeführt wird, über ein parametrisches Verfahren oder ein nichtparametrisches Verfahren extrahiert werden.

10. Verfahren nach Anspruch 6, wobei Verfahrensschritt (c) umfasst:

(c-1) Durchführen ein und desselben Grundgesamtheitstests durch die Steuereinheit (400) unter Verwendung eines parametrischen Verfahrens und eines nichtparametrischen Verfahrens für einzelne Fälle und Ausgeben einer 95/95-DNBR-Werteverteilung für die einzelnen Fälle auf Basis von Normalität eines M/P-Werts des poolfähigen Satzes und Normalität eines M/P-Werts des Validierungssatzes; und
(c-2) Berechnen, durch die Steuereinheit (400), des 95/95-DNBR-Werts unter Verwendung des parametrischen Verfahrens, oder des 95/95-DNBR-Werts unter Verwendung des nichtparametrischen Verfahrens für die einzelnen Fälle auf Basis von Normalität des M/P-Werts des poolfähigen Satzes und Normalität des M/P-Werts des Validierungssatzes, und Bestimmen einer 95/95-DNBR-Grenze unter Verwendung des parametrischen Verfahrens, oder der 95/95-DNBR-Grenze unter Verwendung des nichtparametrischen Verfahrens für die 95/95-DNBR-Werteverteilung für N Fälle.

**Revendications**

1. Système permettant de régler une limite de tolérance d'une corrélation en utilisant une validation croisée répétitive, le système comprenant :

une unité d'extraction de variable (100) apte à extraire une variable de mesure/prédiction, M/P, maximale en partitionnant un jeu d'apprentissage et un jeu de validation de données et en adaptant des coefficients de corrélation pour la détermination de la variable de M/P maximale à partir des données ;
une unité de test de normalité (200) apte à réaliser un test de normalité pour la variable de M/P maximale ; et
une unité de limite d'écart par rapport à un rapport de flux thermique critique, DNBR, (300) apte à déterminer une limite de DNBR admissible sur la base de la variable de M/P maximale, la détermination dépendant de la normalité testée.

2. Système selon la revendication 1, dans lequel l'unité d'extraction de variable (100) comprend :

un module d'initialisation (110) apte à partitionner une base de données, DB, complète de numéros d'identification, ID, d'exécution dans le jeu d'apprentissage et dans le jeu de validation ;
un module d'adaptation de corrélation (120) apte à réaliser l'adaptation de coefficients de corrélation d'un jeu initial d'apprentissage ;
un module d'extraction (130) apte à extraire la valeur de M/P maximale pour un ID d'exécution individuel du jeu d'apprentissage en appliquant le résultat d'adaptation des coefficients de corrélation à l'ID d'exécution individuel ;
un module de détermination de changement d'emplacement et de statistiques (140) apte à déterminer si un emplacement ou des statistiques d'une M/P maximale extraite changent ou non, et, s'il y a un changement, connexion au module d'adaptation de corrélation (120) pour ajuster les coefficients de corrélation jusqu'à ce qu'il n'y ait pas de changement ; et
un module d'extraction de variable (150) apte à extraire la valeur de M/P maximale, en appliquant le résultat d'adaptation des coefficients de corrélation au jeu de validation.

3. Système selon la revendication 1, dans lequel, lorsque le jeu d'apprentissage et le jeu de validation ont une population identique, l'unité de test de normalité (200) détermine si des valeurs de M/P ont ou non une normalité, les valeurs de M/P étant extraites par un procédé paramétrique ou par un procédé non paramétrique en fonction du test de normalité pour un jeu de données pouvant être mis en commun du jeu d'apprentissage et du jeu de validation.

**4.** Système selon la revendication 1, dans lequel, lorsque le jeu d'apprentissage et le jeu de validation n'ont pas une population identique, l'unité de test de normalité (200) détermine si des valeurs de M/P ont ou non une normalité, les valeurs de M/P étant extraites par un procédé paramétrique ou un procédé non paramétrique en fonction du résultat d'un test de distribution normale réalisé à l'avance sur la base uniquement du jeu de validation.

**5.** Système selon la revendication 1, dans lequel l'unité de limite de DNBR (300) comprend :

un module de sortie (310) apte à réaliser un test de population identique en utilisant un procédé paramétrique et un procédé non paramétrique pour des cas individuels et à délivrer une distribution de valeurs de DNBR 95/95 pour les cas individuels sur la base d'une normalité d'une valeur de M/P de jeu pouvant être mis en commun et d'une normalité d'une valeur de M/P de jeu de validation ; et
un module de détermination de limite (320) apte à calculer la valeur de DNBR 95/95 en utilisant le procédé paramétrique ou la valeur de DNBR 95/95 en utilisant le procédé non paramétrique pour les cas individuels sur la base d'une normalité du module de sortie (310), et à déterminer une limite de DNBR 95/95 en utilisant le procédé paramétrique ou la limite de DNBR 95/95 en utilisant le procédé non paramétrique pour la distribution de valeurs de DNBR 95/95 pour N cas.

**6.** Procédé permettant de régler une limite de tolérance d'une corrélation en utilisant une validation croisée répétitive, le procédé étant réalisé par une unité de commande (400) d'un système selon la revendication 1, et comprenant :

(a) l'extraction, par l'unité de commande (400), d'une variable de M/P maximale en partitionnant un jeu d'apprentissage et un jeu de validation de données et en adaptant des coefficients de corrélation pour la détermination de la variable de M/P maximale à partir des données ;
(b) la réalisation, par l'unité de commande (400), d'un test de normalité pour la variable de M/P maximale ; et
(c) la détermination, par l'unité de commande (400), d'une limite de DNBR admissible sur la base de la variable de M/P maximale, la détermination dépendant de la normalité testée.

**7.** Procédé selon la revendication 6, dans lequel l'étape de procédé (a) comprend :

(a-1) l'initialisation, par l'unité de commande (400), en partitionnant une base de données, DB, complète d'ID d'exécution dans le jeu d'apprentissage et dans le jeu de validation ;
(a-2) l'adaptation, par l'unité de commande (400), de coefficients de corrélation en réalisant une adaptation de coefficients de corrélation d'un jeu initial d'apprentissage, sous-ensemble du jeu d'apprentissage ;
(a-3) l'extraction, par l'unité de commande (400), d'une valeur de M/P maximale pour un ID d'exécution individuel du jeu d'apprentissage en appliquant le résultat d'adaptation des coefficients de corrélation à l'ID d'exécution individuel ;
(a-4) le fait de déterminer, par l'unité de commande (400), si un emplacement ou des statistiques d'une valeur de M/P maximale extraite changent ou non, et, s'il y a un changement, le retour à l'étape (a-2) pour ajuster les coefficients de corrélation jusqu'à ce qu'il n'y ait pas de changement ; et
(a-5) l'extraction, par l'unité de commande (400), de la variable en extrayant une variable pertinente à la valeur de M/P maximale, en appliquant le résultat d'adaptation des coefficients de corrélation au jeu de validation.

**8.** Procédé selon la revendication 6, dans lequel, lorsque le jeu d'apprentissage et le jeu de validation ont une population identique à l'étape (b), l'unité de commande (400) détermine si des valeurs de M/P ont ou non une normalité, les valeurs de M/P étant extraites par un procédé paramétrique ou par un procédé non paramétrique en fonction du test de normalité pour un jeu de données pouvant être mis en commun du jeu d'apprentissage et du jeu de validation.

**9.** Procédé selon la revendication 6, dans lequel, lorsque le jeu d'apprentissage et le jeu de validation n'ont pas une population identique à l'étape (b), l'unité de commande (400) détermine si des valeurs de M/P ont ou non une normalité, les valeurs de M/P étant extraites par un procédé paramétrique ou un procédé non paramétrique en fonction du résultat d'un test de distribution normale réalisé à l'avance sur la base uniquement du jeu de validation.

**10.** Procédé selon la revendication 6, dans lequel l'étape de procédé (c) comprend :

(c-1) la réalisation, par l'unité de commande (400), d'un test de population identique en utilisant un procédé paramétrique et un procédé non paramétrique pour des cas individuels et la délivrance d'une distribution de valeurs de DNBR 95/95 pour les cas individuels sur la base d'une normalité d'une valeur de M/P de jeu pouvant être mis en commun et d'une normalité d'une valeur de M/P de jeu de validation ; et

(c-2) le calcul, par l'unité de commande (400), de la valeur de DNBR 95/95 en utilisant le procédé paramétrique ou de la valeur de DNBR 95/95 en utilisant le procédé non paramétrique pour les cas individuels sur la base d'une normalité de la valeur de M/P de jeu pouvant être mis en commun et d'une normalité de la valeur de M/P de jeu de validation, et la détermination d'une limite de DNBR 95/95 en utilisant le procédé paramétrique ou de la limite de DNBR 95/95 en utilisant le procédé non paramétrique pour la distribution de valeurs de DNBR 95/95 pour N cas.

| | |
|---|---|
| 110 — Initialization module | Normality test unit — 200 |
| 120 — Correlation fitting module | |
| 130 — Extraction module | Output module — 310 |
| 140 — Location and statistics change determination module | Limit determination module — 320 |
| 150 — Variable extraction module | DNBR limit unit — 300 |
| Variable extraction unit | |
| 100 — | Control unit — 400 |

FIG. 1

```
                    ┌─────────────────────┐
                    │ Selection of correlation │
                    │    function form        │
                    └─────────────────────┘
                              │
                    ┌─────────────────────┐
                    │    Initial DB Set      │
                    └─────────────────────┘
                              │
                         ╱───────────╲              Validation
                        ╱ Partitioning of ╲ ──────────────────┐
                        ╲ training &      ╱                    │
                         ╲ validation set╱                     │
                          ╲────────────╱                       │
                              │ Training                        │
┌──────────────────┐    ┌─────────────────┐     ┌──────────────────┐
│ Extraction and    │ ◄──│ Training Initial │     │ Validation Initial│
│ storage of run ID │    │      Set         │     │      set          │
│ such as initial   │    └─────────────────┘     └──────────────────┘
│ DB from full DB   │              │                        │
└──────────────────┘    ┌─────────────────┐                 │
         │              │ Fitting of       │◄──────────┐      │
         │              │ correlation      │           │      │
         │              │ coefficients     │           │      │
         │              │ (Fitting)        │           │  ┌──────────────────┐
         ▼              └─────────────────┘           │  │ Extraction and    │
┌──────────────┐        ┌─────────────────┐           │  │ storage of run ID │
│ Training Set │ ─────► │ Application of    │           │  │ such as initial   │
└──────────────┘        │ fitting equation │           │  │ DB from full DB   │
                        │ to training set  │           │  └──────────────────┘
                        └─────────────────┘     ┌──────────────────┐
                                │               │ Iteration until  │
                        ┌─────────────────┐     │ no change of     │
                        │ Extraction of    │     │ location or      │
                        │ maximum M/P value│     │ statistics occurs│
                        │ of training set  │     │ for the maximum  │
                        └─────────────────┘     │ M/P value        │
                                │               └──────────────────┘
                         ╱───────────╲       YES          │
                        ╱ Change of   ╲ ─────────────────┘
                        ╲ location or  ╱
                         ╲ statistics ╱
                          ╲ for the   ╱
                           ╲ maximum  ╱
                            ╲M/P value╱
                             ╲occurs?╱
                                │ NO
                        ┌─────────────────┐     ┌──────────────────┐
                        │ Application of    │◄────│  Validation set   │
                        │ fitting equation │     └──────────────────┘
                        │ to validation set│
                        └─────────────────┘
                                │
                        ┌─────────────────────────┐
                        │ Extraction of relevant    │
                        │ variable to the maximum   │
                        │ M/P value of validation set│
                        └─────────────────────────┘
                                │
                        ┌─────────────────┐
                        │ N times of       │
                        │ iteration        │
                        └─────────────────┘
                                │
                ┌─────────────────────────────────┐
                │ N times of storage of iteration  │
                │ results (N cases)                │
                └─────────────────────────────────┘
```

**FIG. 2**

FIG. 3

EP 3 293 737 B1

(a) — Extraction of a variable by partitioning a training set and a validation set and by fitting of correlation coefficients

(b) — Test of normality according to a variable extraction result

(c) — Determination of a DNBR limit based upon normality

Start → (a) → (b) → (c) → End

FIG. 4

FIG. 5

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20110052340

**Non-patent literature cited in the description**

- A Study on the Validation of Nuclear Criticality Analysis Codes for Spent Fuel. **KIM et al.** MASTER'S THESIS OF GRADUATE SCHOOL OF CHOSUN UNIVERSITY. DEPARTMENT OF NUCLEAR ENGINEERING, 25 February 2016, 25, , 29-33